Europäisches Patentamt

European Patent Office

Office européen des brevets

(11) Publication number: **0 145 530**
A2

(19)

(12) # EUROPEAN PATENT APPLICATION

(21) Application number: **84402086.7**

(22) Date of filing: **17.10.84**

(51) Int. Cl.⁴: **G 09 G 1/16**

(30) Priority: **18.10.83 US 543107**

(43) Date of publication of application: **19.06.85**
**Bulletin 85/25**

(84) Designated Contracting States: **BE CH DE FR GB IT LI
NL SE**

(71) Applicant: **DIGITAL EQUIPMENT CORPORATION,
146 Main Street, Maynard, MA 01754 (US)**

(72) Inventor: **Di Nitto, Robert Salvatore, 292 Washington
Avenue, Chelsea Massachusetts 02150 (US)**
Inventor: **Porcher, Thomas Courtenay, 118 Red Acre
Road, Stow Massachusetts 01775 (US)**
Inventor: **Eng, John Wai, 14 Ted Lane, Southborough
Massachusetts 01772 (US)**
Inventor: **Namias, Charles, 1 Laing Circle, Burlington ,
Massachusetts 01803 (US)**
Inventor: **Hughes, David Bruce, 36 Ontario Drive, Hudson
Massachusetts 01749 (US)**

(74) Representative: **Mongrédien, André et al, c/o SOCIETE
DE PROTECTION DES INVENTIONS 25, rue de Ponthieu,
F-75008 Paris (FR)**

(54) Arrangement for providing data signals for a data display system.

(57)    The present invention includes a microprocessor (15) which
acts to generate rasters of its signals from its read only memory
(ROM), thereby forming character representations of groups of
coded signals, such as ASCII coded signals, coming from a main
data processing device. The rasters of bit signals are temporarily
stored in a buffer (23) which at a subsequent time transmits, in
parallel, groups of said bit signals to a bit map memory (33)
through logic circuitry. The group, or block, transfer of these bit
signals in parallel occurs during horizontal or vertical blank
periods. The parallel transfer during the blank periods provides
part of the basis for acceleration of the transfer of data to a display
device as compared with the prior art. In addition, the micro-
processor provides address information signals to a graphic
display controller (19), which in turn provides starting addresses
for the location of the bit signals. In addition, a bit map memory
device is employed to provide pixel information to a CRT display
device (51) to create the characters to be displayed.

EP 0 145 530 A2

ACTORUM AG

ARRANGEMENT FOR PROVIDING
DATA SIGNALS FOR A DATA DISPLAY SYSTEM

In order to show on a cathode ray tube (CRT) screen some image, whether it be text or graphics, the CRT beam must be turned on (brightened in the case of the image being bright and the background dull) at the correct time to produce a dot, or a series of dots to make a bar, and the like. The foregoing necessitates that the display system have a data storage means which transmits data signals, representing the image to be displayed, in synchronism with clock signals from a clock signal generator. In the prior art, the clock generator is usually located in the CRT circuitry. In synchronism with the clock signals the CRT beam is turned on (or not turned on) as the beam gets to the correct data location. It should be understood that in the case of the intelligence being in a dark mode, against a bright background, then the beam would be turned off. All of the foregoing is well understood in the prior art.

Further in the major part of the prior art, if a system is going to display both graphics and text, two different memory and control systems have been employed. It has been only when the information is finally transmitted to the CRT device that the graphics and text signals have been meshed, or multiplexed.

The introduction of the bit map memory, to the display art, has made the task somewhat easier because in a bit map memory, there is a memory for each pixel location on the CRT screen. Hence, whatever image is to be seen (either text, or graphics, or a combination of both) can be written into the bit map memory and from that one memory (as it is scanned) both graphics and text data signals can be transmitted to the CRT screen to be shown.

The major problem that occurs in the prior art is that the bit map memory was not used for text but the text was encoded from a character generator and continually transmitted to the CRT. While the prior art system was fast, it required two separate memory systems. The present system permits both text and graphics to use the same memory while operating with the speed of the separate memories of the prior art. The present invention employs a five-fold improvement in transmitting data signals to the data display device as will be explained below.

The system in accordance with the invention employs a microprocessor as a dedicated slave device to a main data processing system. The microprocessor responds to groups of coded signals from the main data processing system. In response to each group of coded signals, the present system provides a raster of bit signals from a ROM means, which bit signals graphically define the text character assigned to the coded set of signals being received. In other words, if eight bits of ASCII coded signals are transmitted from the main data processing device, that group of signals causes, in a preferred embodiment, the generation of a raster of $\underline{8}$ by $\underline{10}$ bits from the ROM in the microprocessor. In the microprocessor, ten bytes of data are stored in ROM memory means for each possible text character to be shown. The raster of bit signals are block transferred from the ROM of the microprocessor to buffer. Thereafter the bit signal raster, which has been properly arranged, is transferred in parallel during sync signal blank periods. To effect this block transfer, a graphic display controller device provides addresses to the bit map memory so that a block transfer is written into the bit map memory at a particular starting address.

The microprocessor is programmed to determine whether a block transfer requires one or two cycles and accordingly characters are transferred from the buffer in either one step or two steps. The bit signals in the buffer are located to match where, within a word location, in the bit map memory they are to be ultimately located. The

SR 2684 US.BL

dedication of the microprocessor to providing encoded signals, the speed of the parallel transfer, the fact that the transfer is made during the horizontal and vertical blank periods, utilization of the graphic display controller to provide the addresses, and the prearrangement of the bits in the buffer enable the data transfer to be more rapidly accomplished than in the prior art.

The objects and features of the present invention will be better understood after studying the description below taken in conjunction with the drawings wherein:

Figure 1 is a block schematic diagram of the present system;

Figure 2 depicts the letter "D" as it appears in the ROM and as it later appears in the buffer;

Figure 3 depicts the letter "E" as it appears in the ROM and as it later appears in the buffer;

Figure 4 depicts the letter "C" as it appears in the ROM and as it later appears in the buffer; and

Figure 5 depicts the transfer of bit signals from the buffer to the bit map memory.

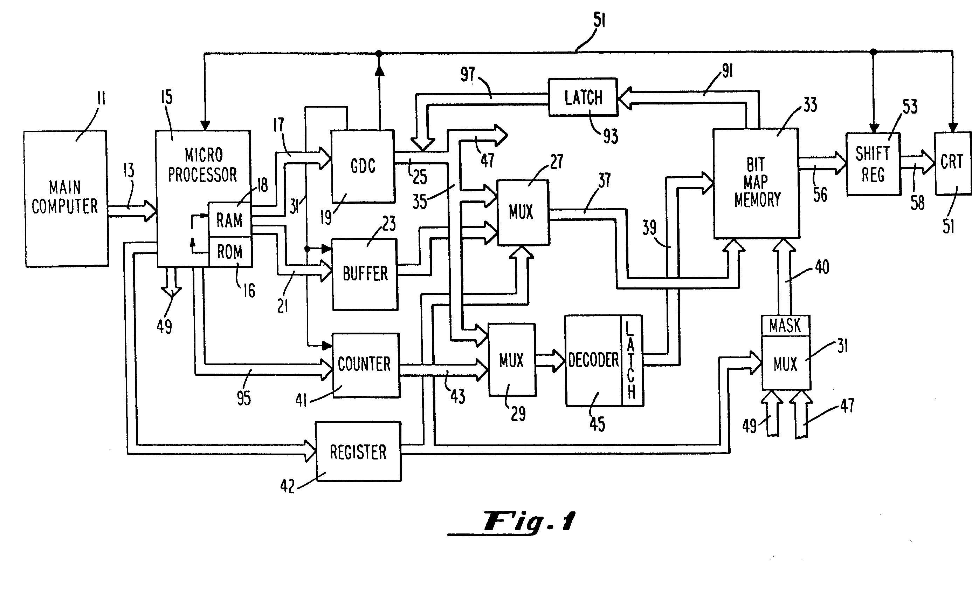

In Figure 1 there is shown a main computer 11 which is connected by channel 13 to a microprocessor 15. It should be understood that the main computer 11 is the heart of a computing system and is connected to many terminals and peripherals which are not shown in Figure 1. It should also be understood that the channels shown throughout Figure 1 comprise a plurality of parallel wires and the signals transmitted over these channels include address signals, instruction signals, and data to be displayed signals. The microprocessor in a preferred embodiment is an 8085 manufactured by Intel Corporation. It should be understood that the microprocessor 15 includes at least a central processing unit, ROM memory means, RAM memory means and logic circuitry to generate instruction information signals.

As can be gleaned from Figure 1 there is a buffer 23

4

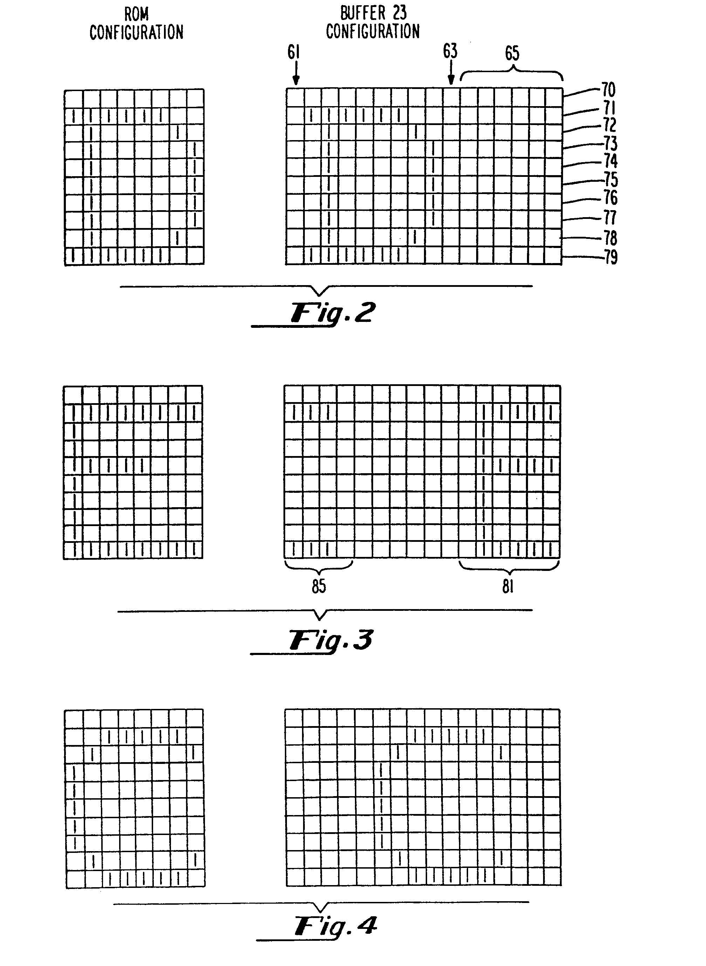

connected by channel 21 to RAM 18 of the microprocessor 15. The present system operates with a 16-bit word that is broken up into two 8-bit bytes. In the ROM 16 there is stored a plurality of 8 by 10 bit rasters, each of which configures a character to be displayed. In other words, as will become clearer hereinafter, the letter "D" would be graphically represented by bit signals stored in an appropriate location in the ROM. Also as will become clearer hereinafter, when the raster of bit signals is transmitted from the ROM, it is transmitted through the central processing unit of the microprocessor back into the RAM 18, and in the course of that action the bit signals are revolved so that when they are transmitted from the RAM 18 along channel 21 to buffer 23, they end up in the proper locations for transmission to the bit map memory 33. The arranging of the bits etc. will be more clearly understood from the discussion of Figures 2 through 5.

The buffer 23 is formed to store 16 bits in a row and to store 10 rows. One character at a time is transferred from the RAM 18 to the buffer 23. The bit signals stored in the buffer 23, representing the character, are transferred in parallel, 16 bits at a time, through the multiplexer (hereinafter MUX) 27 along channel 37 and into the bit map memory 33. As will become clearer in the discussion of Figures 2 through 5, when the bit signals are transmitted into the bit map memory, six of those bits are masked out on channel 40. The bit signals from the buffer 23 are located in the bit map memory in accordance with address signals present on channel 39.

As can also be gleaned from an examination of Figure 1, there is a graphic display controller 19 connected to the microprocessor 15 through the channel 17. In a preferred embodiment the graphic display controller (hereinafter referred to as the GDC) is a MICRO PD 7220 manufactured by NEC Corporation. The GDC 19 has memory means to store address and instruction information from the microprocessor

SR 2684 US.BL

and also includes two registers which can be incremented
or decremented to accomplish the changing of an address.
The GDC 19 also includes a write signal generator which
provides clock signals as well as horizontal and vertical
sync signals. The sync signals are transmitted on connection
57 to the CRT 51, to the shift register 53 and to the microprocessor 15. Write clock signals are transmitted to the
buffer 23 and to destination counter 41 over connection 31.
In addition, the horizontal and vertical sync signals
operate within the GDC 19 to accomplish certain operations
therein. For every horizontal blank period there are seven
write cycles generated and for every vertical blank period
there are 594 write cycles generated. Other rates could be
used.

The destination counter 41 is included in the layout
in Figure 1 because it is part of an overall system. However, it is not employed with the invention described in
this description. The operation of the destination counter
41 is described in my co-pending application entitled,
"Split Screen Smooth Scrolling Arrangement", serial number
       and which is assigned to the assignee of this
application. The GDC 19 accepts address information and
instruction information from the microprocessor 15 and holds
that information to effect address signals on channel 39 so
that characters being transferred from the buffer 23 are
properly located in the bit map memory 33.

As can be seen in Figure 1, the GDC 19 transmits
its address information along channel 25, along channel 35,
through MUX 29, through decoder 45, onto the channel 39.
The MUX 29 has a second input on channel 43, from the
destination counter 41, but as was mentioned above, that
circuitry plays no role in the operation of the present
invention. Insofar as the present invention is concerned,
it can be assumed that the address information from the
GDC 19 always goes through the MUX 29, i.e., that the MUX 29
is not even present. The decoder 45 takes the address

SR 2684 US.BL

information and decodes it into the proper signals to operate with the bit map memory 33. In a preferred embodiment the decoder 45 is a 74LS253, manufactured by Texas Instruments Corporation. Those signals are held in the latch so that they are present when the bit signals on channel 37 arrive at the bit map memory 33. It should also be noted that channel 91 and latch 93 are also circuitry elements which are used in connection with a split-screen smooth scrolling circuit described in the aforementioned copending application, i.e., channel 91, latch 93, and channel 97 play no role in the operation of the present invention.

When the characters have been stored in the bit map memory 33, they are read therefrom in response to address signals on channel 39. The bit signals or pixel signals being transmitted from the bit map memory 33 are transmitted along channel 56 to shift register 53. The signals are advanced from shift register 53 in response to horizontal sync signals on connection 57. When the signals are advanced from shift register 53 they pass along channel 58 to the CRT 51. Since the signals on channel 58 are transmitted in synchronism with the horizontal sync signal, they are present in synchronism with the beam of the CRT, which is what is required to provide the display.

In Figure 1 there is shown a MUX 31 which has two inputs, namely channels 49 and 47. When bit signals are being transmitted from the buffer 23, through MUX 27 and along channel 37, certain of those signals must be masked so that only the proper connections in the bit wire bit map memory are energized. The microprocessor 15 through its CPU keeps an account of what signals, or what signals from the buffer device 23, require masking and hence a set of masked signals are transmitted on channel 49 to MUX 31. The signals on channel 49 in turn energize or do not energize certain write enable signals on channel 40 and the system in effect electronically masks certain signals on channel 37.

The other input to the MUX 31 is channel 47 which comes from the GDC. The GDC 19 has the ability to transmit graphic display signals along channel 25 and the channel 35, through the MUX 27, and along channel 37. While that capability is present in the system shown in Figure 1, it does not become part of the present invention. The present invention is directed to accelerating the signals representing text characters from the main computer 11 to the CRT 51. The five-fold feature of the present invention which acts together to accelerate the signals representing the characters includes the concept of using the microprocessor 15 as a dedicated slave. In accordance with this dedication, a group of 8-bit ASCII coded signals sent on channel 13 is immediately transformed into an 8 by 10 bit raster read out of ROM 16. That 8 by 10 bit raster of bit signals is immediately transformed into a 16 by 10 bit raster in the RAM 18 and then transferred to buffer 23. In the course of that transformation the second feature comes into play because the bit signals are properly arranged during the foregoing transformation so that when they are located in buffer 23, they are in the proper locations upon transfer to the bit map memory 33. The third feature lies in the capability of buffer 23 to transmit the bit signals in parallel and hence the proper locating of the bit signals in the bit map memory is speeded up because of the parallel transmission. The parallel transmissions are accomplished during blank periods and this fourth feature also adds to the overall speeding up of the operation since the transmissions are taking place during time periods which otherwise might not be used. The fifth feature of the present invention is the use of the GDC 19 which provides the address information and monitors the address information so that the buffer sends its signals into the bit map memory at the proper addresses. As was mentioned earlier, the GDC has two registers. In the "present" address register there is initially located the starting address to which the

SR 2684 US.BL

information in the buffer 23 will be sent and located. In response to each write signal from the write clock generator in the GDC 19 the starting address register is incremented. The region ending value register will initially be loaded with the value of ten in the preferred embodiment because the buffer 23 will have ten words stored therein and the operation is such that the buffer will be completely emptied before it is reloaded. Accordingly, in response to the write signals, the region ending value register will be decremented. When the region ending value register has a value of zero, the microprocessor is informed by the GDC that buffer 23 can be reloaded. The feature of having such traffic control outside of the microprocessor adds to the overall speed of the operation.

If we study Figures 2 through 5 the operation of the present system will become clearer. In Figures 2, 3 and 4, there is depicted on the left-hand side the arrangement of the bit signals in the ROM. The letter "D" in Figure 2 is shown in the ROM in an 8 by 10 configuration and it will be noted that the top row of the 8 by 10 raster is left blank. The reason that the top row is left blank is so that when the letters are joined together on the screen, there will be space between the rows of letters. In Figure 3 the letter "E" is shown in the ROM on the left-hand side in an 8 by 10 configuration, and in Figure 4 the letter "C" is shown in the ROM in an 8 by 10 configuration.

When the letter "D" shown in the ROM configuration in Figure 2 is transferred from the ROM 16 to the buffer 23 in Figure 1, that set of bit signals is transmitted through the CPU of the microprocessor 15 and the signals are revolved so that they are located in the 16 by 10 buffer configuration shown in Figure 2. It will be noted in the buffer configuration of Figure 2 that there is a left-hand column 61 which is shown blank. Actually there are zeros stored in the blank locations. It should also be noted that there is a right-hand column 63 which has zeros located in it. From the column 61 through the column 63 there are ten bit
positions and hence the letter "D" in Figure 2 in the
buffer configuration is located in a 10 by 10 raster.  The
remaining six columns 65 are blank and as will become
clearer hereinafter, those columns are masked when the
information is transferred from the buffer 23 into the
bit map memory 33.

The microprocessor 15 is programmed to accommodate
a number of formats.  The microprocessor 15 knows that upon
the first transfer of a raster of bit signals from the buffer 23,
the letter will be configured in the first ten bits, and
hence the control signals on channel 49 to the MUX 31 dictate
that the mask effected on channel 40 will mask out the last
six bit positions depicted as columns 65 in Figure 2.

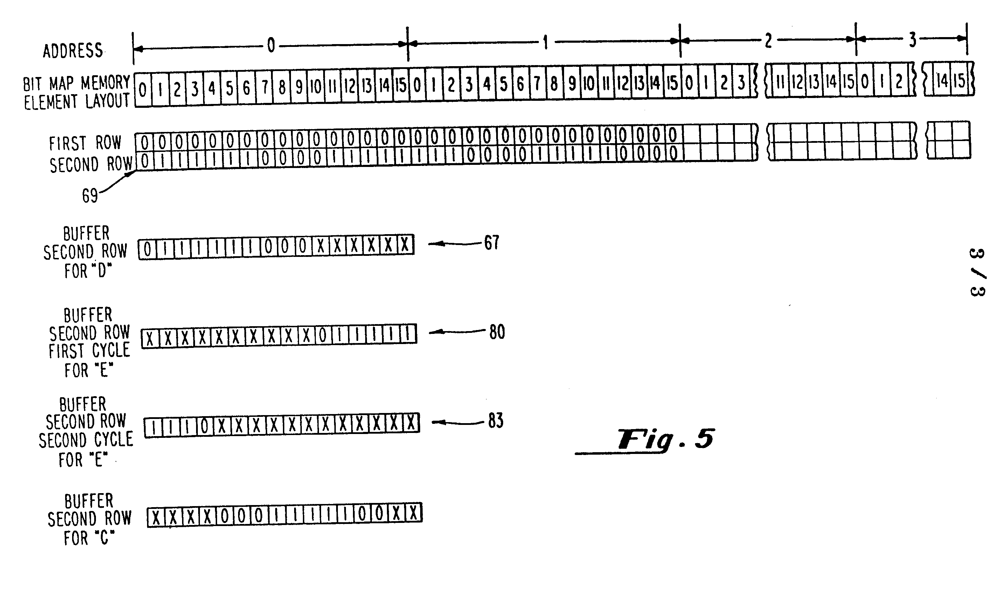

The foregoing can be understood from a study of
Figure 5.  In Figure 5 there is shown the organization of
four addresses in the bit map memory 33.  At each of the
addresses 0, 1, 2, and 3 (designated as addresses in Figure
5) the bit map memory can store 16 bits or one word.  The
16 bit locations are designated as 0 through 15.  In Figure
5 the first row represents the memory elements for the pixel
locations on the CRT.  It can be seen in Figure 5 that all
of these first row locations are blank.  It will be recalled
that the top row of the raster in the ROM is blank to
provide a space between rows of words on the display, hence
this first row is blank.  The second row in Figure 5 shows
the bit signals which would be transferred to transfer the
second row of each of the letters "D", "E" and "C" as
depicted in Figures 2, 3 and 4.  Thus far we have discussed
the transfer of one row of bits in the letter "D" from the
ROM to the buffer as depicted in Figure 2.  Let us consider how
the bit signals are transferred from the buffer into the
bit map memory as shown in Figure 5.  At location 67 the
buffer is shown storing the second row of bit information
(depicted in Figure 2).  When the second row of bit information is being transferred from the buffer 23, through the
MUX 27, along channel 37, the microprocessor 15 provides the

SR 2684 US.BL

masking information to the MUX 31 so that the last six pixel locations are masked or blanked and this is indicated in Figure 5 at location 67 by the x's. Accordingly, loaded into the second row of the bit map memory at the positions 0 through 9, we see that the bit signals are the same as the bit signals in the first ten positions of the location 67. The starting address in the present address register in the GDC started out with the address 0, and the blank information shown in the first row was transmitted from the buffer into the bit map memory. At that time the region length value register in the GDC 19 was decremented. In response to the next write clock signal the present address register in the GDC is incremented by 50, and hence the second row in the bit map memory and its positions 0 through 9 are loaded as shown in position 69. At that time the length register will be decremented and the operation continues until each of the rows 70 through 79 shown in Figure 2 has been transferred from the buffer 23, through the MUX 27, along the channel 37 to the bit map memory. Since each of these transfers requires that the last six positions be masked, the mask information on 49 remains constant until there has been a transfer of a complete character from the buffer 23 to the bit map memory 33. When the GDC "present" register has been incremented ten times and the length ending register has been decremented ten times, the GDC advises the microprocessor that a new character can be transferred from the ROM 16 through the RAM 18 to buffer 23. In the present embodiment seven words from the buffer 23 can be transferred to the bit map memory during a horizontal blank period. Accordingly at the end of such a horizontal blank period the GDC will have its present address register reading 400 or the eighth line and the length ending address register will be set at 3. During the second horizontal blank period, the remaining three rows, namely rows 77 through 79 in Figure 2, will be transferred from the buffer 23 to the bit map memory. During the third horizontal blank time, the microprocessor 15 will load
the letter "E" from the ROM 16 through the RAM 18 into
the buffer 23 and the process will repeat itself.

When the letter "E" is loaded from the ROM 16
to the buffer 23 it takes the configuration shown in
Figure 3. The microprocessor knows that the letter "E"
is the second letter being loaded and the system knows
that the bit positions 10 through 15 (Figure 5) in the bit
map memory must have a portion of the letter "E" loaded
therein. Accordingly, the letter "E" from the ROM, as shown
in Figure 3, is revolved so that it ends up in the buffer
as shown in the buffer configuration portion of Figure 3.
During the first cycle of the second transfer the microprocessor sends masking instruction information on channel
49 so that the first ten column positions transferred from
the buffer 23 are masked. This is shown at location 80 of
Figure 5. In location 80 of Figure 5 it can be noted that
the 0 through 9 bit positions would be masked (indicated by
x's) and only the information in bit positions 10 through 15
would be transferred to the bit map memory. The system
would repeat the operation, always masking the first ten
positions until the bit map memory is loaded with the information shown in section 81 of Figure 3. At this time the
registers of the GDC would indicate to the microprocessor
that section 81 had been loaded. However, the microprocessor
15 is programmed to know that during the second operation
there must be second unloading of the buffer 23 and at
that time positions 4 through 15 must be masked as shown
by section 83 in Figure 5. In section 83 (in Figure 5), it
can be seen that the first three bits plus the blank
right-hand column (shown in section 85 of Figure 3) are
being transferred to the bit map memory and that the
positions 4 through 15 are masked out. The GDC in the
meantime has changed the address from 0 to 1 and hence the
three bits plus the blank column are located in positions

$\underline{0}$, $\underline{1}$, $\underline{2}$ and $\underline{3}$ of address $\underline{1}$ in the bit map memory. When the registers in GDC 19 indicate to the microprocessor that the loading of section 85 has been completed, the microprocessor will commence to load the letter "C" from the ROM 16 through RAM 18 into the buffer 23 as shown in the buffer configuration of Figure 4. When the third letter, in our case the letter "C", is transferred from the buffer 23 to the bit map memory, the columns $\underline{0}$, $\underline{1}$, $\underline{2}$ and $\underline{3}$ as well as the columns $\underline{14}$ and $\underline{15}$ will be masked out, and hence the letter "C" will be transferred and loaded into the columns $\underline{5}$ through $\underline{13}$ with the operation being the same as that described above.

As was mentioned earlier, the bit signals are located in the buffer within a word configuration in the same way that they will be loaded into the bit map memory within a word configuration, and this of course saves time in the ultimate transferring of the information into the bit map memory. It also becomes apparent from the foregoing discussion that the use of the microprocessor 15 as a dedicated slave for the purpose of encoding a few signals into a large number of signals increases the speed with which the information is transferred from the main computer to the CRT. In addition, the description of Figures 2-5 in conjunction with the understanding of Figure 1 makes it clear that the transfer of the information from the buffer 23 in parallel, during blank times in response to the write clock signals, rapidly increases the transfer of the information from the main computer to the CRT 51. The use of the GDC to provide the starting addresses and to keep track of which addresses are in effect as well as when the character has been transferred, contributes to the speed of the overall operation.

## CLAIMS

1. A system for displaying text which has a
CRT display means and a bit map memory connected thereto
to store pixel information for transfer to said CRT display
means, characterized in that said system has an arrangement
for accelerating data signals representing text characters
from a main computer to said bit map memory comprising in
combination: microprocessor means connected to said main
computer to receive therefrom instruction signals, address
signals and coded signals representing text characters, said
microprocessor means being formed to provide different rasters
of bit signals, each defining a different text character to
be displayed, in response to receiving different groups of
said coded signals; buffer means connected to said microprocessor means to receive said rasters of bit signals and
store the same for further transmission in parallel; first
circuitry means connecting said buffer means to said bit
map memory for transmitting said rasters of bit signals in
parallel thereto; controller circuitry connected to said
microprocessor means to receive address signals and
instruction signals therefrom; second circuitry means connecting
said controller circuitry to said bit map memory to provide
address signals thereto to direct said rasters of bit signals
to particular locations in said bit map memory and alternatively to cause said bit map memory to read out pixel information
from certain locations to said CRT display means.

2. A system for displaying text according to
claim 1, characterized in that said microprocessor means is
formed to arrange said raster of bit signals when they are
transmitted to said buffer means so that said bit signals
are stored in said buffer means in the same positions relative
to one another that they will be stored in said bit map memory.

3. A system for displaying text according to claim
1, characterized in that said microprocessor means is formed

SR 2684 US.BL

14

to arrange said rasters of bit signals so that the bit signals making up the characters are positioned in character form relative to one another in the same fashion that they will be stored in said bit map memory.

4. A system for displaying text according to claim 1, characterized in that each character to be displayed is formed in an 8 by 10 raster of bit signals and is transformed into a 16 by 10 raster of bit signals in said microprocessor means, in that said buffer means is formed to store at least a 16 by 10 raster of bit signals, and in that said bit signals are transmitted from said buffer means in one cycle and alternatively in two cycles depending upon whether or not said bit signals stored therein represent a contiguous character makeup.

5. A system for displaying text according to claim 1, characterized in that said controller circuitry includes a clock signal generator which generates write signals, horizontal sync signals, and vertical sync signals and in that said clock signal generator is connected to said buffer means to cause said buffer means to transmit segments of said rasters of bit signals during horizontal and vertical blank times.

6. A system for displaying text according to claim 5, characterized in that said microprocessor means is formed to monitor the operation of said buffer means so that said buffer means must transmit all of the bit signals held therein before said microprocessor means will transmit a new raster of bit signals thereto.

7. A system for displaying text according to claim 1, characterized in that said arrangement for accelerating data signals further comprises a means to mask signals being transmitted from said buffer means to said bit map memory and third circuitry means coupling said means to mask signals to said microprocessor means to receive control signals therefrom.

SR 2684 US.BL

15

8. A system for displaying text according to claim 1, characterized in that each character to be displayed is formed in ROM means in said microprocessor means in an 8 by 10 raster of bit signals and is transformed into a 16 by 10 raster of bit signals in said microprocessor means, in that said buffer means is formed to receive and store at least a 16 by 10 raster of bit signals, in that said arrangement for accelerating data signals further comprises a means to mask signals being transmitted from said buffer means to said bit map memory and third circuitry means coupling said means to mask signals to said microprocessor means to receive control signals therefrom whereby said means to mask signals operates on said bit signals in conjunction with address signals from said controller circuitry to reduce every eight 16 by 10 rasters of bit signals into eight 10 by 10 rasters of bit signals when located in said bit map memory.

9. A system for displaying text according to claim 1, characterized in that said microprocessor means includes read only memory (ROM) means which is formed to receive said groups of coded signals and formed to provide a different raster of bit signals respectively for each different group of coded signals received.

_**Fig.1**_

ROM
CONFIGURATION

BUFFER 23
CONFIGURATION

61      63    65

70
71
72
73
74
75
76
77
78
79

_Fig.2_

85        81

_Fig.3_

_Fig.4_

ADDRESS

BIT MAP MEMORY ELEMENT LAYOUT

FIRST ROW
SECOND ROW

BUFFER SECOND ROW FOR "D" ← 67

BUFFER SECOND ROW FIRST CYCLE FOR "E" ← 80

BUFFER SECOND ROW SECOND CYCLE FOR "E" ← 83

BUFFER SECOND ROW FOR "C"

Fig. 5

3 / 3

0145530